# EUROPEAN PATENT SPECIFICATION

(11) **EP 3 543 312 B1**
(45) Date of publication and mention of the grant of the patent: **25.01.2023**
(21) Application number: 17871327.7
(22) Date of filing: 09.11.2017
(51) Int. Cl.: C09K 5/12, F28D 20/00

(54) **HEAT TRANSFER MEDIUM MELTING COMPOSITION, HEAT TRANSFER SYSTEM USING SAME, AND POWER GENERATION DEVICE USING HEAT TRANSFER SYSTEM**
WÄRMEÜBERTRAGUNGSMEDIUM SCHMELZZUSAMMENSETZUNG, WÄRMEÜBERTRAGUNGSSYSTEM DAMIT UND STROMERZEUGUNGSVORRICHTUNG MIT DEM WÄRMEÜBERTRAGUNGSSYSTEMS
COMPOSITION DE FUSION DE MILIEU DE TRANSFERT THERMIQUE, SYSTÈME DE TRANSFERT THERMIQUE L'UTILISANT, ET DISPOSITIF DE PRODUCTION D'ÉNERGIE UTILISANT LE SYSTÈME DE TRANSFERT THERMIQUE

(30) Priority: 21.11.2016 KR 20160154773; 04.05.2017 KR 20170057030
(43) Date of publication of application: 25.09.2019
(73) Proprietor: Korea Institute of Machinery & Materials, Daejeon 34103 (KR)
(72) Inventor: KIM, Young, Daejeon 34033 (KR); CHOI, Jun-seok, Daejeon 34070 (KR); KIM, Dong-ho, Daejeon 34116 (KR); YOON, Seok-ho, Daejeon 35247 (KR); KIM, Ook-joong, Daejeon 34209 (KR)
(74) Representative: Gaunt, Thomas Derrick
(86) International application number: PCT/KR2017/012638
(87) International publication number: WO 2018/093091

(56) References cited:
- JP-A- H11 325 769
- JP-A- 2016 188 347
- JP-B- S5 894 282
- KR-B1- 960 001 084
- US-A- 3 719 225
- US-A1- 2011 120 673

## Description

### BACKGROUND

### 1. Field of Disclosure

The present disclosure of invention relates to a heat transfer medium having a melting composition, a heat transfer system using the heat transfer medium, and a generating apparatus using the heat transfer system, and more specifically the present disclosure of invention relates to a heat transfer medium having a melting composition, a heat transfer system using the heat transfer medium, and a generating apparatus using the heat transfer system, used for generating, transferring and storing of heat energy, or converting the heat energy to other energy in a process or a system with relatively high temperature.

### 2. Description of Related Technology

Generally, an electric power generated using a fossil fuel has an economical merit, but as the fossil fuel is exhausted, the value is gradually decreased and environmental problem may be more increased. Thus, recently, renewable energy has been developed and researched.

To increase efficiency of the renewable energy is necessary to replace the conventional power generating system to the newly developed renewable energy system. Thus, a heat transfer medium used for generating, transferring and storing of heat energy, or converting the heat energy to other energy in a process or a system, and a heat transfer system using the heat transfer medium have been developed and researched.

The heat transfer system may be divided into the system performed in a relatively low temperature and that in a relatively high temperature. The low temperature system under about 100°C(or about 150°C with high pressure) is normally used for providing waste heat from a factory, a power plant and so on to home, and aqueous solution composite is normally used as the heat transfer medium. However, in the high temperature system, the aqueous solution composite is impossible to be used for the heat transfer medium. In the high temperature system such as a solar system using a solar energy, high temperature heat transfer system is used to increase energy efficiency, and thus the aqueous solution composite which is evaporated at about 100°C may not be used.

Thus, the heat transfer medium capable of used in the relatively high temperature process having high energy efficiency, and the heat transfer system having the heat transfer medium are developed and researched with high interest. For example, in steam generation, supercritical generation, ultra-supercritical generation, and so on in which the heat energy is repeatedly transferred and stored in a temperature of 450~800°C, energy efficiency may be high compared to the system performed in the relatively low temperature. Generally, as the temperature increases, converting efficiency of a power block is increased, and thus the generating efficiency is increased and leveling-off energy cost is decreased.

However, the system for transferring and storing the heat energy in the relatively high temperature, is very sensitive to variables like a place, a time, a circumstance and so on, has relatively large size, and is operated with the relatively high temperature, so that various kinds of side-effects may occur due to intermittent or irregular characteristics. Thus, in the above system, immediate and active reaction may be necessary in transferring, storing, converting and so on of the heat energy.

In the relatively high or ultra-high temperature heat transfer system, the heat transfer medium storing and transferring the heat energy is necessary in the relatively high or ultra-high temperature. However, the heat transfer medium developed until now is less stable due to the high temperature, and is relatively sensitive to the variables such as the place, the time, the circumstance and so on.

For example, a solar power having the high temperature heat transfer system boils a water and has a reflective mirror for focusing the solar light to make a high pressure steam, and the steam operates a turbine to generate the electric power. Here, the heat transfer medium is used for transferring, storing and converting the heat energy. Thus, the heat transfer medium used for the solar power may have heat stability.

In addition, the heat transfer medium is to be maintained with a melting state in a relatively low temperature, to increase the efficiency. Thus, the heat transfer medium may have a relatively low melting point.

For example, a fluid having eutectic mixture of biphenyl and disulfonic acid is developed as the heat transfer medium. The fluid having biphenyl and disulfonic acid has the relatively low melting point, but is hard to be used over 390°C due to heat deterioration. In addition, when the system is operated under the temperature of 390°C, the efficiency of the steam turbine generated by the heat may be very decreased.

Thus, the heat transfer medium of molten salt having high heat stability is to be developed. Here, the heat transfer medium of molten salt may have high density, high heat capacity, and high heat stability in the relatively high temperature. USPN 2015-0010875 discloses a thermal energy storage with molten salt in which the molten salt is used as the heat transfer medium.

However, the heat transfer medium of molten salt is limited in using over 550°C. For example, as the heat transfer medium based on nitrate, a fluid having 60% of sodium nitrate and 40% of potassium nitrate is used. However, since the heat transfer medium base on nitrate (NO ₃⁻)is decomposed over 550°C, the heat transfer medium is hard to be used over the temperature of 550°C. Thus, since the heat transfer medium is reused within a closed system, the heat transfer medium is hard to be used in the system having the temperature over 550°C.

The heat transfer medium having a relatively low melting point is to be necessary. Thus, the energy necessary for phase transformation is relatively low, the melting state is maintained with relatively large range of temperature, boiling point is relatively high, heat stability is relatively high, and evaporation or decomposition is hard to occur.

For example, as a result of research or development, the heat transfer medium base on sulfuric acid is developed, but sulfuric acid (SO/-) is corrosive to a metal and thus the system having the heat transfer medium thereof has relatively low durability and weather resistance.

Thus, the heat transfer medium used for generating, transferring, storing and converting the energy is necessary to increase the durability and weather resistance of the heat transfer system using the heat transfer medium, and to have high heat stability and low melting point.

US 2011/120673 A1 discloses a system for transferring/storing heat comprised of a heat exchange/storage apparatus including a chamber, and a heat input device adapted to heat/provide a vapor into the chamber.

US 3 719 225 A discloses a method of transferring heat and heat storage composition, employing a substantially anhydrous composition of alkali metal hydroxide, alkali metal nitrate and one or more of several additives.

JP 2016 188347 A discloses a molten salt type heat medium, particularly a heat medium containing a metal carbonate mixture.

### SUMMARY

The present invention is developed to solve the above-mentioned problems of the related arts. The present invention provides a heat transfer medium having a melting composition having heat stability over a relatively high temperature of 700°C, and having a relatively low melting point and a relatively narrow range of the melting point.

In addition, the present invention also provides a heat transfer medium having a melting composition less corrosive to a metal.

In addition, the present invention also provides a heat transfer medium having a melting composition having relatively high energy transferring efficiency due to relatively high heat capacity, relatively high heat stability and relatively low melting point.

In addition, the present invention also provides a heat transfer medium having a melting composition having relatively low melting point and existing with fully melted in the melting point.

In addition, the present invention also provides a heat transfer method using the heat transfer medium.

In addition, the present invention also provides a generating apparatus.

According to an example embodiment of a heat transfer medium having a melting composition, the heat transfer medium includes alkali metal chloride, first alkali metal carbonate, second alkali metal carbonate, and alkali metal hydroxide.

In an example, the alkali metal may be one independently selected from lithium, sodium and potassium.

In an example, the heat transfer medium may include potassium chloride (KCl), sodium carbonate (Na2CO3), potassium carbonate (K2CO3), and sodium hydroxide (NaOH).

In an example, potassium chloride may be between about 20 weight% and about 50 weight %, sodium carbonate may be between about 15 weight % and about 50 weight %, potassium carbonate may be between about 10 weight % and about 40 weight %, and sodium hydroxide may be between about 5 weight% and about 50 weight %.

In an example, sodium hydroxide may be between 51 weight % and about 90 weight %. Here, potassium chloride may be between about 1 weight % and about 10 weight %, sodium carbonate may be between about 2 weight % and about 20 weight %, potassium carbonate may be between about 2 weight% and about 20 weight%.

In an example, a melting point may be between about 200°C and about 300°C.

In an example, each of a decomposition temperature and a boiling point may be between about 700°C and about 800°C.

In an example, a band of the melting point may be within ±10°C with respect to a melting peak temperature.

According to another example embodiment of a heat transfer method, the heat transfer method includes A) heat energy being provided to a heat storage material from a heat source, B) the heat energy of the heat storage material being converted into an energy different from the heat energy such that the heat energy of the heat storage material is lost, and C) the heat storage without the heat energy being transferred to the heat source. B) is performed after A), C) is performed after B), and A) is performed after C) and thus A), B) and C) are sequentially circulated. The heat storage material includes the heat transfer medium having a melting composition, and the heat storage material includes alkali metal chloride, first alkali metal carbonate, second alkali metal carbonate, and alkali metal hydroxide.

In an example, A) may be performed in a temperature between about 300°C and about 700°C.

According to still another example embodiment of a generating apparatus, the generating apparatus includes a heat providing unit providing heat energy to a heat storage material from a heat source, a heat exchange unit receiving the heat energy from the heat storage material of the heat providing unit, a generator converting the heat energy from the heat exchange unit to an energy different from the heat energy, and a transfer unit transferring the heat storage without the heat energy. The heat storage material includes the heat transfer medium having a melting composition, and the heat storage material includes alkali metal chloride, first alkali metal carbonate, second alkali metal carbonate, and alkali metal hydroxide.

According to the present example embodiments, the heat transfer medium having a melting composition is not decomposed and evaporated over 700°C, and thus has increased heat stability, a relatively low melting point under 300°C and a relatively narrow range of the melting point.

In addition, the heat transfer medium having a melting composition is less corrosive to a metal.

In addition, the heat transfer medium having a melting composition has a relatively high heat capacity.

In addition, the heat transfer medium having a melting composition has a predetermined composition ratio, so that the heat transfer medium has a relatively low melting point and total compositions are entirely melted at the melting point.

Thus, the heat transfer method including the heat transfer medium is less corrosive to the metal and has relatively high heat stability with a melting point under 300°C, and thus the heat transfer medium having the melting composition which is entirely melted at the melting point is used to increase the energy converting efficiency and the process efficiency.

### BRIEF DESCRIPTION OF THE DRAWINGS

FIG. 1 is a schematic diagram illustrating a heat transfer system using a heat transfer medium having a melting composition according to an example embodiment of the present example embodiment;
FIGS. 2 to 4 are thermal analysis spectrums illustrating melting points of the heat transfer mediums according to example embodiments of the present example embodiment;
FIG. 5 is a graph illustrating a change of melting heat at the melting point of 264~265°C of the heat transfer medium of Example 3 and Comparative example 1; and
FIG. 6 is a thermal analysis spectrum illustrating a melting point of the heat transfer medium of Comparative example 2.

*** Reference numerals**

| | |
|---|---|
| 10 : first transfer unit | 20 : second transfer unit |
| 30 : heat providing unit | 40 : heat exchange unit |
| 41 : generator | 41a: turbine |

### DETAILED DESCRIPTION

Hereinafter, a heat transfer medium having a melting composition, a heat transfer system using the heat transfer medium, and a generating apparatus using the heat transfer system, are explained referring to the drawings, in detail.

This invention may, however, be embodied in many different forms and should not be construed as limited to the embodiments set forth herein. Rather, these embodiments are provided so that this disclosure will be thorough and complete, and will fully convey the scope of the invention to those skilled in the art. Same elements or components are expressed with same reference numerals in the drawings.

In addition, unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, unit of % of the present invention may be interpreted as weight %, if there is no definition on the unit of %.

In addition, a temperature of the present invention may be the temperature measured at a normal pressure of 1 atm, if there is no definition on the temperature.

In addition, the heat transfer medium of the present invention is a material storing or losing heat energy, and thus the material may be used for the heat energy of the heat transfer medium to be transferred to other material or to be converted into other energy. Thus, the heat transfer medium includes heat storage material, heat dissipating material, heat transfer material and so on, to be used as the mentioned above.

In addition, the heat stability of the present invention may be explained with reference to a boiling point and a decomposition temperature of the composition. For example, high heat stability may be defined as high boiling point and high decomposition temperature.

In addition, the decomposition temperature of the present invention may be a temperature at which at least one component of compound such as chloride, carbonate and hydroxide in the melting composition starts to be decomposed.

In addition, the boiling point of the present invention may be a temperature at which at least one component of compound such as chloride, carbonate and hydroxide in the melting composition starts to be boiled.

In addition, other energy of the present invention may be all kinds of energy except for the heat energy, for example, electronic energy, potential energy, kinetic energy and so on.

In the present example embodiments, the heat transfer medium having a melting composition has relatively high heat stability and a relatively low melting point, and total compositions are entirely melted at the melting point. For example, the heat transfer medium has relatively high heat stability and is not decomposed over 700°C, and has relatively low melting point under 300°C. Thus, total compositions are entirely melted at the melting point.

The heat transfer medium having a melting composition according to the present example embodiment includes alkali metal chloride, first alkali metal carbonate, second alkali metal carbonate, and alkali metal hydroxide. Here, the first alkali metal carbonate and the second alkali metal carbonate are different from each other.

The alkali metal may be any alkali metal in the periodic table, and may be selected from lithium, sodium, potassium, rubidium, cesium and francium. Thus, the heat transfer medium may have enhanced heat stability and have merits on industrial or environmental sides.

The heat transfer medium of the present example embodiment may have a decomposition temperature over 700°C, for example between about 700°C and about 800°C. Over the melting point, alkali metal chloride, alkali metal carbonate, and alkali metal hydroxide are melted to be in an ion state. The ions like Cl⁻, CO₃²⁻, OH⁻ and so on, are in the melting state, and the decomposition temperature thereof is very high.

The heat transfer medium of the present example embodiment including alkali metal chloride, first alkali metal carbonate, second alkali metal carbonate, and alkali metal hydroxide, has a relatively low melting point between about 200°C and about 300°C.

For example, when the heat transfer medium includes chloride of potassium, carbonate of sodium, carbonate of potassium and hydroxide of sodium, the melting point thereof may be relatively low between about 200°C and about 300°C.

For example, the heat transfer medium having a melting composition includes potassium chloride (KCl), sodium carbonate (Na₂CO₃), potassium carbonate (K₂CO₃) and sodium hydroxide (NaOH). The composition thereof may have a relatively high decomposition temperature over 700°C, for example between about 700°C and about 800°C, and have a relatively low melting point under 300°C, for example between about 200°C and about 300°C. Thus, the heat transfer medium according to the present example embodiment has the melting point less than the heat transfer medium not including NaOH, by about 150°C.

Here, the melting point of KCl is about 770°C, the melting point of Na₂CO₃ is about 858°C, the melting point of K₂CO₃ is about 900°C, and the melting point of NaOH is about 328°C. However, the mixture thereof which is the melting composition according to the present example embodiment, has the melting point much less than the melting points mentioned above. The melting composition having KCl, Na₂CO₃ and K₂CO₃ has the melting point between about 400°C and about 500°C, but the melting composition of the present example embodiment further including NaOH has the melting point between about 200°C and about 300°C, which is very efficient. The heat transfer medium is maintained in a melting state in a relatively low temperature, and thus the composition is easy to be transferred. Thus, the heat transfer medium having the melting composition according to the present example embodiment is very effective in the process and energy efficiency.

In the melting composition which is the common mixture, the temperature starting the melting may be different from the temperature finishing the melting due to the components or the component ratio. Thus, the melting point of the melting composition may be defined with one of the temperature starting the melting, the temperature finishing the melting or the temperature between the starting and the finishing.

Thus, in the present example embodiments, the melting point is defined as the temperature starting the melting.

The heat transfer medium having the melting composition has the relatively low melting point and the band of the melting point of the heat transfer medium is relatively narrow. For example, the heat transfer medium having the melting composition includes KCl, Na₂CO₃ and K₂CO₃, and especially NaOH, and thus, the melting point thereof is very low and the band of the melting point thereof is very narrow. The band of the melting point of the melting composition including KCl, Na₂CO₃ and K₂CO₃, is more than ±70°C with respect to a peak temperature, but the band of the melting point of the melting composition including KCl, Na₂CO₃, K₂CO₃, and NaOH is less than ±10°C, for example ±5°C or ±3°C with respect to the peak temperature. Thus, the melting composition including KCl, Na₂CO₃, K₂CO₃, and NaOH has the relatively narrow band of the melting point, and thus the maximum melting point may be determined more easily, and the melting composition be less affected by various kinds of environmental effects.

The band of the melting point in the present example embodiment, may mean a band of a period between a melting start point and a melting finish point with respect to the peak temperature of a heat analysis spectrum obtained using a heat analysis device such as differential scanning calorimetric device.

The composition ratio of the melting composition may have a first composition ratio or a second composition ratio. The melting composition satisfying the first composition ratio or the second composition ratio may have the relatively low melting point.

For example, the melting composition having the first composition ratio, may include alkali metal chloride between about 20 weight % and about 50 weight %, first alkali metal carbonate between about 10 weight % and about 50 weight %, second alkali metal carbonate between about 10 weight % and about 50 weight %, and alkali metal hydroxide between about 5 weight % and about 50 weight %. In addition, the melting composition having the second composition ratio, may include alkali metal chloride between about 1 weight % and about 10 weight %, first alkali metal carbonate between about 2 weight % and about 20 weight %, second alkali metal carbonate between about 2 weight % and about 20 weight %, and alkali metal hydroxide between about 51 weight % and about 90 weight. Alternatively, the melting composition having the second composition ratio, may include alkali metal chloride between about 1 weight % and about 10 weight %, first alkali metal carbonate between about 2 weight % and about 20 weight %, second alkali metal carbonate between about 2 weight % and about 20 weight %, and alkali metal hydroxide between about 60 weight % and about 90 weight. When the first composition ratio or the second composition ratio is satisfied, the melting point is more decreased to maintain a fluid circulation temperature much lower. In addition, the melting points of the melting composition having the components commonly mixed may be dispersed within a relatively narrow band, and thus the maximum melting point may be more easily determined, and the melting composition be less affected by various kinds of environmental effects. Further, the melting composition may be less affected by the corrosion of the metal material.

For example, the melting composition having a first composition ratio may include KCl, Na₂CO₃ and K₂CO₃, and 5~50 weight % of NaOH. NaOH has deliquescence and causes corrosion of the metal due to a moisture, and thus when the first composition ratio having NaOH with relatively lower ratio compared to a second composition ratio, the corrosiveness to the metal is remarkably decreased to increase durability and weather resistance of a device used for the heat transfer system.

Further, the melting composition having the first composition ratio may include 20~50 weight % of KCl, 15~50 weight % of Na₂CO₃, 10~40 weight % of K₂CO₃, and 5~50 weight % of NaOH, and specifically, may include 30∼45 weight % of KCl, 22∼45 weight % of Na₂CO₃, 12∼35 weight % of K₂CO₃, and 5∼15 weight % of NaOH. Thus, a temperature of the melting composition which is a common mixture, is increased and decreased repeatedly, and thus physical and chemical stability may be enhanced.

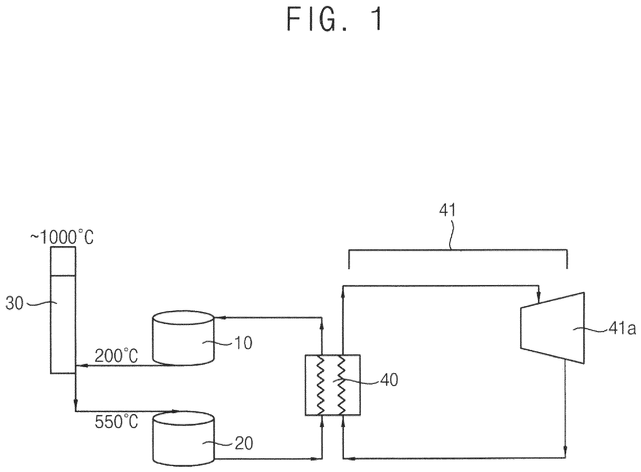

In addition, the melting composition having the second composition ratio may include KCl, Na₂CO₃ and K₂CO₃, and 51∼90 weight % of NaOH, more specifically 60∼90 weight % of NaOH. Thus, the total components of the composition are melted in the relatively lower melting point of 265°C. Thus, as illustrated in FIG.1, the system or the apparatus in which the melted state of composition directly transferred to transfer energy is used, is proper to use the melting composition having the second composition ratio. In addition, a density of heat storage is very high at a relatively lower melting temperature, and thus energy efficiency may be increased when used as the heat transfer medium having the melting composition.

For example, the melting composition having the second composition ratio may include 1~10 weight % of KCl, 2~20 weight % of Na₂CO₃, 2~20 weight % of K₂CO₃, and 51∼90 weight % of NaOH, and specifically, may include 1~10 weight % of KCl, 2∼20 weight % of Na₂CO₃, 2~20 weight % of K₂CO₃, and 60∼80 weight % of NaOH. Thus, a temperature of the melting composition which is a common mixture, is increased and decreased repeatedly, and thus physical and chemical stability may be enhanced.

The heat transfer medium having the melting composition according to the present example embodiment is used for the heat transfer system or the generating apparatus using the heat transfer system. Here, the operating temperature for the heat transfer medium having the melting composition is not limited, and may be in a range of 200~800°C, and specifically in a range of 300~700°C.

The heat transfer system (method) using the heat transfer medium having the melting composition according to the present example embodiment includes A) heat energy being provided to a heat storage material from a heat source, B) the heat energy of the heat storage material being converted into an energy different from the heat energy such that the heat energy of the heat storage material is lost, and C) the heat storage without the heat energy being transferred to the heat source. Here, A), B) and C) are circulated, and the heat storage material includes the heat transfer medium having the melting composition.

For example, in step A), the heat energy is provided to the heat storage material from the heat source. The heat storage material receiving the heat energy may be transferred to anywhere requiring the heat energy, or may be converted to other energy except for the heat energy, which is step B). Here, in step B), the heat energy of the heat storage material is converted into the other energy and thus the heat storage material loses the heat energy. The heat storage material losing the heat energy is transferred to the heat source of step A) from step C), and then the heat storage material losing the heat energy receives the heat energy from the heat source again. Thus, in the present example embodiment, the above circulation is repeated, and thus the generating system may be operated.

For example, step A) may be performed in a temperature of 200~800°C, more specifically in a temperature of 300~700°C. The heat energy having the above mentioned high temperature is stored, transferred or converted, and thus the generating efficiency may be increased and the converting efficiency may also be increased.

In addition, the generating apparatus using the heat transfer system includes a heat providing unit providing heat energy to a heat storage material from a heat source, a heat exchange unit receiving the heat energy from the heat storage material of the heat providing unit, a generator converting the heat energy from the heat exchange unit to an energy different from the heat energy, and a transfer unit transferring the heat storage without the heat energy. Here, the heat storage material includes the heat transfer medium having the melting composition.

In the present example embodiment, the heat providing unit may be any apparatus or system providing the heat energy, for example an apparatus providing the heat energy generated from nuclear power generation, geothermal power generation, solar power generation, steam supply and power generation, thermal power planting generation or etc.

The heat exchange unit receives the heat energy from the heat providing unit, and transfers the heat energy to the path connected to the apparatus requiring the heat energy. The path may be any path configured to convert the heat energy to the other energy.

The transfer unit transfers or stores the heat energy or the heat storage material having the heat energy. For example, the transfer unit may be at least one, and may be divided into a storage part and a transfer part, but not limited thereto.

For example, the generating apparatus may be as illustrated in FIG. 1, but not limited thereto. ~1000°C in FIG. 1 means a maximum condensing temperature, and thus a relatively high heat source may be used. 200°C in FIG. 1 means that a heat storage material spends the heat energy and is in a state of a relatively lower energy state. In addition, 550°C in FIG. 1 means that the storage material receives the heat energy from the heat providing unit and is in a state of a relatively high energy state.

Other energy in the present example embodiment may be energy converted from the heat energy, and may be electronic energy, potential energy, kinetic energy and so on. Thus, the heat exchange unit and the generator may be a module, apparatus or system converting the heat energy and a structure, a size and so on thereof are not limited. For example, as illustrated in FIG. 1, the heat transfer system may be applied to the solar cell generation. The heat energy from the heat exchange unit may be provided to a turbine or something of the solar cell generation and to be converted into the other energy.

The heat source in the present example embodiment, may be incineration heat, waste heat, solar heat, or a heat from nuclear power generation, geothermal power generation, solar power generation, steam supply and power generation, thermal power planting generation or etc.

The heat transfer system in the present example embodiment may be performed in a closed or open system. The heat transfer medium having the melting composition may be circulated in the closed or open system, and thus thermodynamic mechanism such as the transferring, the storage or the converting may be performed.

Hereinafter, further example embodiments of the present invention may be explained in detail, but the claim invention may be not limited thereto.

### <Example 1>

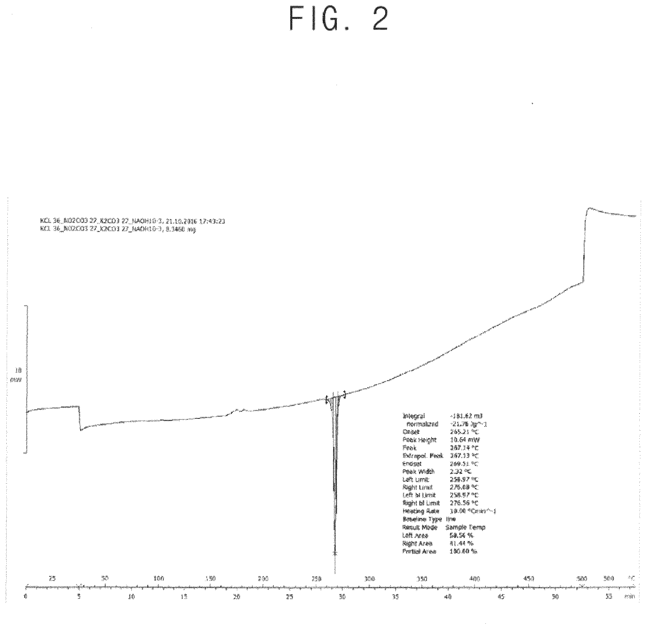

The heat transfer medium having the melting composition including 36 weight % of KCl, 27 weight % of Na₂CO₃, 27 weight % of K₂CO₃ , and 10 weight % of NaOH, was completed. The melting point of the composition was heated and measured with a velocity of 10K/min using differential scanning calorimeters (DSC), and the results is illustrated in FIG. 2.

### <Example 2>

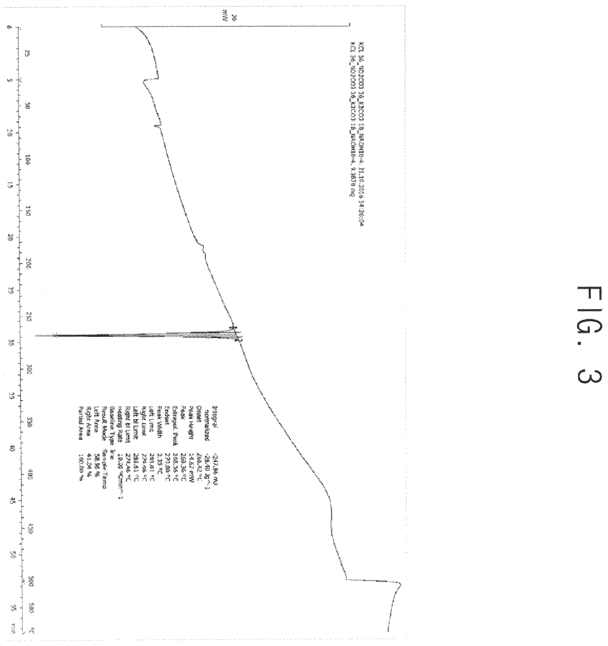

The heat transfer medium having the melting composition including 36 weight % of KCl, 36 weight % of Na₂CO₃, 18 weight % of K₂CO₃ , and 10 weight % of NaOH, was completed. The melting point of the composition was heated and measured same as Example 1, and the result is illustrated in FIG. 3.

### <Example 3>

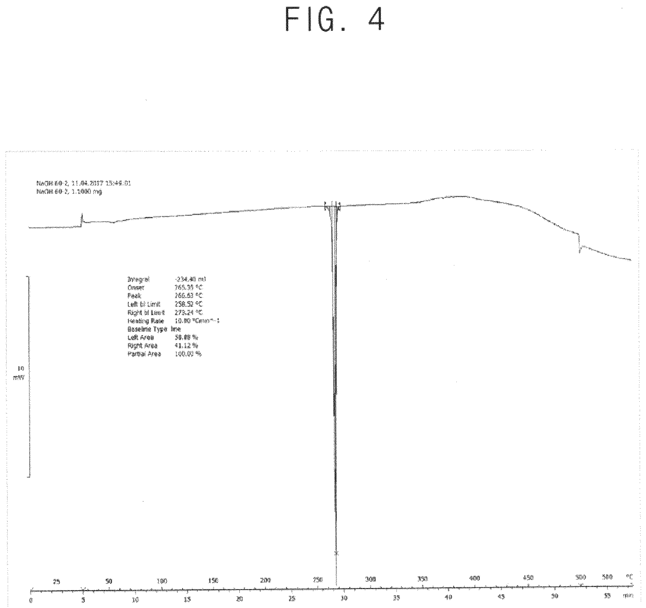

The heat transfer medium having the melting composition of Table 1 was completed. In addition, among Table 1, the melting point of the heat transfer medium having the melting composition including 8 weight % of KCl, 16 weight % of Na₂CO₃, 16 weight % of K₂CO₃, and 60 weight % of NaOH, was measured same as Example 1, and the result is illustrated in FIG. 4.

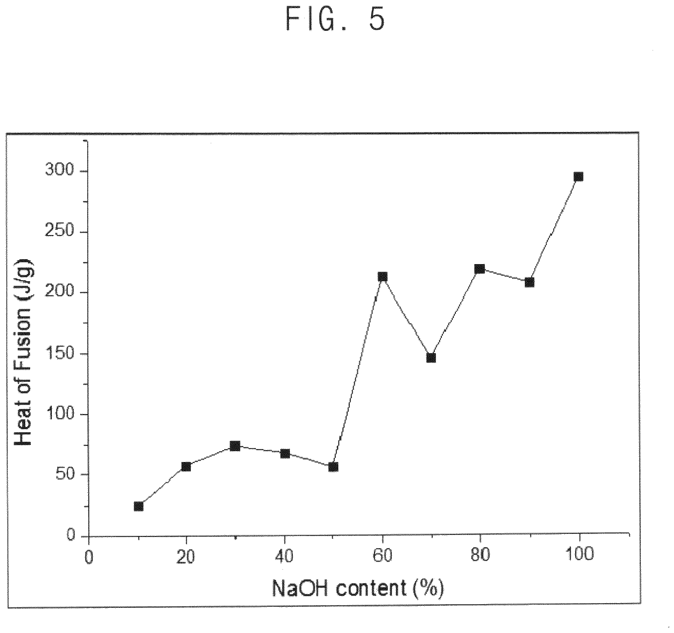

In addition, a change of melting heat at the melting point of 264∼265°C, of the heat transfer medium having the melting composition of Table 1, was measured same as Example 1, and the result is illustrated in FIG. 5.

### <Comparative example 1>

The heat transfer medium having the melting composition of Table 1 was completed. In addition, a change of melting heat at the melting point of 264~265°C, of the heat transfer medium having the melting composition of Table 1, was measured same as Example 1, and the result is illustrated in FIG. 5.

**[Table. 1]**

| Weight % | KCl | Na₂CO₃ | K₂CO₃ | NaOH |
|---|---|---|---|---|
| Example 3 | 18 | 36 | 36 | 10 |
| | 16 | 32 | 32 | 20 |
| | 14 | 28 | 28 | 30 |
| | 12 | 24 | 24 | 40 |
| | 10 | 20 | 20 | 50 |
| | 8 | 16 | 16 | 60 |
| | 6 | 12 | 12 | 70 |
| | 4 | 8 | 8 | 80 |
| | 2 | 4 | 4 | 90 |
| Comparative Example 1 | 0 | 0 | 0 | 100 |

### <Comparative example 2>

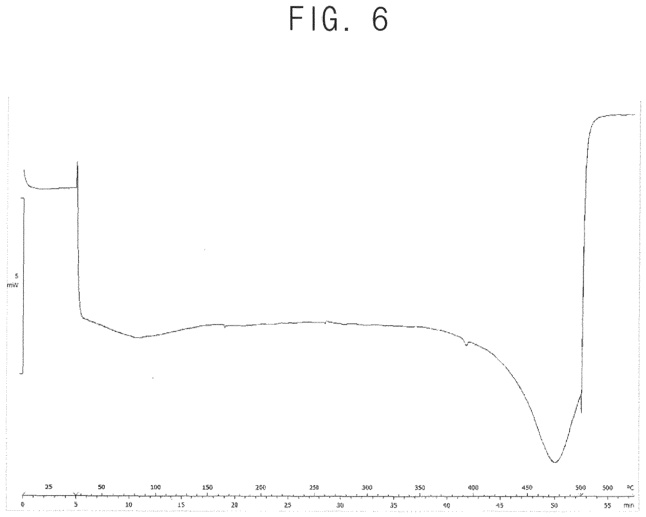

The heat transfer medium having the melting composition including 20 weight % of KCl, 40 weight % of Na₂CO₃, and 40 weight % of K₂CO₃ was completed. The melting point of the composition was heated and measured same as Example 1, and the result is illustrated in FIG. 6.

Referring to FIGS. 2 and 3, the heat transfer medium having the melting composition in Example 1 and Example 2, has the relatively low melting point of about 265°C, less than 270°C. In contrast, the heat transfer medium having the melting composition in Comparative example 2 has the relatively high melting point of about 470°C, over 450°C. NaOH is further included in the composition having KCl, Na₂CO₃, and K₂CO₃, and thus the melting point may be decreased by about 200°C.

In addition, referring to FIGS. 2 to 4, and 6, in Example 1, Example 2 and Example 3, a band of the melting point is about ±5°C with respect to a peak temperature of 265°C, but in Comparative example 2, that is about 70°C with respect to the peak temperature of 475°C. Thus, the heat transfer medium having the melting composition further including NaOH may have the band of the melting point much narrower.

Referring to FIG. 5, when NaOH is less than weight % of 51, the melting heat is not high and thus the composition may be partially melted. In Example 1, Example 2 and Example 3, even though the composition having less than 51 weight % of NaOH has the relatively lower melting point, the composition is not entirely melted at the melting point.

However, even though the composition having less than 51 weight % of NaOH is not entirely melted at the melting point, the energy may be stored and dissipated. In addition, the ratio of NaOH is relatively low to decrease the corrosiveness to the metal, and thus may be more profitable to the heat transfer medium as the heat storage material.

However, when 51∼90 weight % of NaOH is included, the melting heat is rapidly increased from 51 weight % of NaOH, and thus the composition is entirely melted, which means that the composition is entirely melted at the relatively lower melting point of 264~265°C. In addition, the high melting heat means that the density of heat storage is high, too.

When over 51 weight % of NaOH is included, the composition is entirely melted around the melting point, and thus the composition may be very profitable to the heat transfer medium having the melting composition in which the composition in a melted state is directly transferred to transfer the energy.

## Claims

1. A heat transfer medium having a melting composition, the heat transfer medium comprising:
alkali metal chloride, first alkali metal carbonate, second alkali metal carbonate, and alkali metal hydroxide.

2. The heat transfer medium of claim 1, wherein the alkali metal is one independently selected from lithium, sodium and potassium.

3. The heat transfer medium of claim 2, comprising:
potassium chloride, sodium carbonate, potassium carbonate and sodium hydroxide.

4. The heat transfer medium of claim 3, wherein potassium chloride is between about 20 weight % and about 50 weight %, sodium carbonate is between about 15 weight % and about 50 weight %, potassium carbonate is between about 10 weight % and about 40 weight %, and sodium hydroxide is between about 5 weight % and about 50 weight %.

5. The heat transfer medium of claim 3, wherein sodium hydroxide is between 51 weight % and about 90 weight %.

6. The heat transfer medium of claim 5, wherein potassium chloride is between about 1 weight % and about 10 weight %, sodium carbonate is between about 2 weight % and about 20 weight %, potassium carbonate is between about 2 weight % and about 20 weight %.

7. The heat transfer medium of claim 1, wherein a melting point is between about 200°C and about 300°C, and each of a decomposition temperature and a boiling point is between about 700°C and about 800°C.

8. The heat transfer medium of claim 3, wherein a band of the melting point is within ±10°C with respect to a melting peak temperature.

9. A heat transfer method comprising:
A) heat energy being provided to a heat storage material from a heat source;
B) the heat energy of the heat storage material being converted into an energy different from the heat energy such that the heat energy of the heat storage material is lost; and
C) the heat storage without the heat energy being transferred to the heat source,
wherein B) is performed after A), C) is performed after B), and A) is performed after C), and thus A), B) and C) are sequentially circulated,
wherein the heat storage material comprises the heat transfer medium having a melting composition, and the heat storage material comprises alkali metal chloride, first alkali metal carbonate, second alkali metal carbonate, and alkali metal hydroxide.

10. The heat transfer method of claim 9, wherein A) is performed in a temperature between about 300°C and about 700°C.

11. A generating apparatus comprising:
a heat providing unit providing heat energy to a heat storage material from a heat source;
a heat exchange unit receiving the heat energy from the heat storage material of the heat providing unit;
a generator converting the heat energy from the heat exchange unit to an energy different from the heat energy; and
a transfer unit transferring the heat storage without the heat energy, wherein the heat storage material comprises the heat transfer medium having a melting composition, and the heat storage material comprises alkali metal chloride, first alkali metal carbonate, second alkali metal carbonate, and alkali metal hydroxide.

## Patentansprüche

1. Wärmeübertragungsmedium mit einer Schmelzzusammensetzung, das Wärmeübertragungsmedium umfassend:
Alkalimetallchlorid, erstes Alkalimetallcarbonat, zweites Alkalimetallcarbonat und Alkalimetallhydroxid.

2. Wärmeübertragungsmedium nach Anspruch 1, wobei das Alkalimetall unabhängig ausgewählt ist aus Lithium, Natrium und Kalium.

3. Wärmeübertragungsmedium nach Anspruch 2, umfassend:
Kaliumchlorid, Natriumcarbonat, Kaliumcarbonat und Natriumhydroxid.

4. Wärmeübertragungsmedium nach Anspruch 3, wobei Kaliumchlorid zwischen ca. 20 Gew.-% und ca. 50 Gew.-% liegt, Natriumcarbonat zwischen 15 Gew.-% und ca. 50 Gew.-% liegt, Kaliumcarbonat zwischen ca. 10 Gew.-% und ca. 40 Gew.-% liegt und Natriumhydroxid zwischen ca. 5 Gew.-% und ca. 50 Gew.-% liegt.

5. Wärmeübertragungsmedium nach Anspruch 3, wobei Natriumhydroxid zwischen 51 Gew.-% und ca. 90 Gew.-% liegt.

6. Wärmeübertragungsmedium nach Anspruch 5, wobei Kaliumchlorid zwischen ca. 1 Gew.-% und ca. 10 Gew.-% liegt, Natriumcarbonat zwischen 2 Gew.-% und ca. 20 Gew.-% liegt, Kaliumcarbonat zwischen ca. 2 Gew.-% und ca. 20 Gew.-% liegt.

7. Wärmeübertragungsmedium nach Anspruch 1, wobei der Schmelzpunkt zwischen ca. 200 °C und ca. 300 °C liegt, und eine Zersetzungstemperatur und ein Siedepunkt zwischen ca. 700 °C und ca. 800 °C liegt.

8. Wärmeübertragungsmedium nach Anspruch 3, wobei ein Band des Schmelzpunktes innerhalb von ±10 °C im Verhältnis zur Peak-Schmelztemperatur liegt.

9. Wärmeübertragungsverfahren umfassend:
A) Wärmeenergie, die einem Wärmespeicherungsmaterial von einer Wärmequelle bereitgestellt wird;
B) die Wärmeenergie des Wärmespeicherungsmaterials, die in eine Energie umgewandelt wird, die keine Wärmeenergie ist, so dass die Wärmeenergie des Wärmespeicherungsmaterials verloren geht; und
C) die Wärmespeicherung, ohne dass die Wärmeenergie an die Wärmequelle übertragen wird, wobei B) nach A) ausgeführt wird, C) nach B) ausgeführt wird, und A) nach C) ausgeführt wird, und so A), B) und C) sequenziell zirkulieren,
wobei das Wärmespeicherungsmaterial das Wärmeübertragungsmedium mit einer Schmelzzusammensetzung umfasst, und das Wärmespeicherungsmaterial Alkalimetallchlorid, erstes Alkalimetallcarbonat, zweites Alkalimetallcarbonat und Alkalimetallhydroxid umfasst.

10. Wärmeübertragungsverfahren nach Anspruch 9, wobei A) bei einer Temperatur zwischen ca. 300 °C und ca. 700 °C ausgeführt wird.

11. Erzeugungsvorrichtung umfassend:
Wärmebereitstellungseinheit, die einem Wärmespeicherungsmaterial Wärmeenergie von einer Wärmequelle bereitgestellt;
Wärmetauschereinheit, die die Wärmeenergie vom Wärmespeicherungsmaterial der Wärmebereitstellungseinheit empfängt;
Generator, der die Wärmeenergie aus der Wärmetauschereinheit in eine Energie umwandelt, die keine Wärmeenergie ist; und
eine Übertragungseinheit, die die Wärmespeicherung ohne die Wärmeenergie überträgt, wobei das Wärmespeicherungsmaterial das Wärmeübertragungsmedium mit einer Schmelzzusammensetzung umfasst, und das Wärmespeicherungsmaterial Alkalimetallchlorid, erstes Alkalimetallcarbonat, zweites Alkalimetallcarbonat und Alkalimetallhydroxid umfasst.

## Revendications

1. Milieu de transfert de chaleur présentant une composition de fusion, le milieu de transfert de chaleur comprenant :
du chlorure de métal alcalin, un premier carbonate de métal alcalin, un second carbonate de métal alcalin et de l'hydroxyde de métal alcalin.

2. Milieu de transfert de chaleur selon la revendication 1, dans lequel le métal alcalin est un métal choisi de manière indépendante parmi le lithium, le sodium et le potassium.

3. Milieu de transfert de chaleur selon la revendication 2, comprenant :
du chlorure de potassium, du carbonate de sodium, du carbonate de potassium et de l'hydroxyde de sodium.

4. Milieu de transfert de chaleur selon la revendication 3, dans lequel le chlorure de potassium est compris entre environ 20 % en poids et environ 50 % en poids, le carbonate de sodium est compris entre environ 15 % en poids et environ 50 % en poids, le carbonate de potassium est compris entre environ 10 % en poids et environ 40 % en poids et l'hydroxyde de sodium est compris entre environ 5 % en poids et environ 50 % en poids.

5. Milieu de transfert de chaleur selon la revendication 3, dans lequel l'hydroxyde de sodium est compris entre 51 % en poids et environ 90 % en poids.

6. Milieu de transfert de chaleur selon la revendication 5, dans lequel le chlorure de potassium est compris entre environ 1 % en poids et environ 10 % en poids, le carbonate de sodium est compris entre environ 2 % en poids et environ 20 % en poids, le carbonate de potassium est compris entre environ 2 % en poids et environ 20 % en poids.

7. Milieu de transfert de chaleur selon la revendication 1, dans lequel un point de fusion est compris entre environ 200 °C et environ 300 °C et chaque élément parmi une température de décomposition et un point d'ébullition est compris entre environ 700 °C et environ 800 °C.

8. Milieu de transfert de chaleur selon la revendication 3, dans lequel une bande du point de fusion est à l'intérieur de ±10 °C par rapport à une température de pic de fusion.

9. Procédé de transfert de chaleur comprenant :
A) l'énergie thermique étant fournie à un matériau de stockage de la chaleur à partir d'une source de chaleur ;
B) l'énergie thermique du matériau de stockage de la chaleur étant convertie en une énergie différente de l'énergie thermique de sorte que l'énergie thermique du matériau de stockage de la chaleur est perdue ; et
C) le stockage de la chaleur sans que l'énergie thermique ne soit transférée à la source de chaleur, dans lequel B) est réalisé après A), C) est réalisé après B) et A) est réalisé après C) et ainsi A), B) et C) sont effectués en boucle de manière séquentielle,
dans lequel le matériau de stockage de la chaleur comprend le milieu de transfert de chaleur présentant une composition de fusion et le matériau de stockage de la chaleur comprend un chlorure de métal alcalin, un premier carbonate de métal alcalin, un second carbonate de métal alcalin et un hydroxyde de métal alcalin.

10. Procédé de transfert de chaleur selon la revendication 9, dans lequel A) est réalisé à une température comprise entre environ 300 °C et environ 700 °C.

11. Appareil de génération comprenant :
une unité de fourniture de chaleur fournissant l'énergie thermique à un matériau de stockage de la chaleur à partir d'une source de chaleur ;
une unité d'échange de chaleur recevant l'énergie calorifique provenant du matériau de stockage de la chaleur de l'unité de fourniture de chaleur ;
un générateur convertissant l'énergie thermique provenant de l'unité d'échange de chaleur en une énergie différente de l'énergie thermique ; et
une unité de transfert transférant le stockage de la chaleur sans l'énergie thermique, dans lequel dans lequel le matériau de stockage de la chaleur comprend le milieu de transfert de chaleur présentant une composition de fusion et le matériau de stockage de la chaleur comprend un chlorure de métal alcalin, un premier carbonate de métal alcalin, un second carbonate de métal alcalin et un hydroxyde de métal alcalin.
